# EUROPEAN PATENT APPLICATION

(11) **EP 1 555 002 A1**
(43) Date of publication of application: **20.07.2005**
(21) Application number: 03730217.1
(22) Date of filing: 10.06.2003
(51) Int. Cl.: A61G 3/06, B60P 1/43

(54) **VEHICLE ACCESS RAMP**

(30) Priority: 11.06.2002 ES 200201337
(71) Applicant: Fine Access, S.L., 41016 Sevilla (ES)
(72) Inventor: SALAZAR CORCUERA, Javier, 26509 AGONCILLO (LA RIOJA) (ES)
(74) Representative: Carvajal y Urquijo, Isabel
(86) International application number: PCT/ES2003/000278
(87) International publication number: WO 2003/103558

(57) **Abstract**

A ramp for accessing vehicles, comprising a casing (1) open at one of its walls, inside of which an extractable platform (11) is housed, assembled between collapsible bearings (9) fixed to a bridge piece assembled on carriages which can move along tracks perpendicular to the open wall. The bearings (9) swivel between positions internal and external to the casing (1), guided by cams (16).

## Description

The present invention refers to a ramp for accessing vehicles, intended for being assembled on the vehicle itself and specially designed to facilitate access to persons with reduced mobility, overcoming gaps between the vehicle and the platform or ground which can range between 50 and 300 mm in height.

Access ramps which are coupled to the vehicle and actuated when the vehide is stopped, for facilitating those persons with reduced mobility in getting in and out of the vehicle, are already known for the purpose set forth.

In this sense, Patent number 9902102 of the same applicants can be mentioned, wherein an access ramp for persons of reduced mobility is disclosed, intended for being coupled to a vehicle, and comprising a, straight, prismatic overall configuration casing, having a square or slightly rectangular plan form, a short height, which is open at one of its walls. A platform is housed inside this casing, which can be extracted through the open wall thereof. A mechanism for linear operation of the platform is also housed in the casing, by means of which mechanism movement of the platform between retraction and extraction positions is achieved. The operating mechanisms are constituted of cylinders connected to the platform 2 through bearings which can move through the interior of the casing. With the constitution set forth, operation of the platform, which will serve as an access surface, is achieved by means of hydraulic operating elements, which can complicate and increase the cost of installation.

The object of the present invention is an access ramp of the type set forth, in which the platform operating mechanisms are simplified, eliminating pneumatic or hydraulic cylinders.

Another object of the invention is to obtain a ramp of the type set forth, in which the platform operating mechanisms allow, in the ramp use position, perfect adaptation of the platform to the access surface of the vehicle.

The ramp of the invention includes a casing with a right prismatic box shape, having an approximately square plan form and a short height, which is open at one of its walls, this wall being closeable by means of a collapsible wall. A platform, which can be extracted through the open wall, is housed inside this casing. A linear operation mechanism responsible for moving said platform between retraction and extraction positions is also housed inside the casing.

According to the invention, the ramp operating mechanism comprises a bridge piece housed inside the casing in a position parallel to the open wall thereof, which is assembled on carriages which can move on tracks running on the bottom of the casing, in a direction perpendicular to the open wall thereof. This bridge piece incorporates an electric motor assembled thereon, with a gear ring meshing with a solidly fixed rack of the casing, which is parallel to the movement tracks of the carriages. The bridge piece also incorporates two swivel side bearings assembled thereon, between which the extractable platform is assembled by hinges at its rear edge, according to a pin which is perpendicular to the direction of movement of said platform. These side bearings bear respective pulleys having aligned pins on which the extractable platform rests.

Two front cams placed against the internal surface of the walls confining the open wall of the casing, from the free transverse edge thereof, are also assembled inside the casing. The same number of wheels of the side bearings rest and can move on these cams, the cams having a profile guiding said wheels such that they cause the swiveling of the bearings between a collapsed position, in which the carriages and bearings can move towards the interior of the casing, dragging the platform towards its retracted position, and a lifted position, in which said bearings remain outside of the casing, projecting from the upper base thereof, and the platform runs outside of the casing in a position tilted downwards towards its front edge.

When the bearings are in the collapsed position, inside the casing, the pulley, wheel and hinge pins to the bridge piece and extractable platform are distributed, approximately, according to the vertices of an inverted trapezium, the wheel and hinge pin to the platform occupying the upper, rear and front positions, respectively, whereas the hinge pin to the bridge piece and the pulley occupy the lower, rear and front positions, respectively.

The cams causing the swiveling of the side bearings are provided with respective facing grooves, each one of which includes two consecutive straight spans along which the wheel of the side bearings runs, an upper, internal span which is parallel to the bases of the casing, and a tilted end span running with a downward tilt and reaching the height of the hinge pin of the side bearings and bridge piece.

Lifting of the collapsible door for the closure of the open wall of the casing is achieved by means of a mechanism constituted of a towline or cable running in a direction parallel to the tracks and fixed at one end to said door, whereas at the opposite end, it is fixed to a bearing slidable along a runner, against which runner the platform collides when it is drawn in and reaches its internal limit position, causing the drawing and lifting of the door.

The features of the ramp of the invention, as well as its operation, are set forth below in greater detail with the aid of the attached drawings, wherein a non-limiting embodiment is shown.

In the drawings:
Figure 1 shows a plan view of a ramp constituted according to the invention, showing half of the platform in a retracted position and the other half in an extracted position.
Figure 2 shows a longitudinal section of the ramp, taken along cut line II-II of figure 1.
Figure 3 shows an enlarged view of detail A of figure 2.
Figure 3a shows a view similar to figure 3, with the platform in the extraction phase.
Figure 4 shows a view of the ramp according to direction B of figure 1, without the rear wall of the casing and showing only the left half thereof.
Figure 5 shows a partial longitudinal section of the casing taken along cut line V-V of figure 1.
Figures 6 and 7 show plan and elevational views of the bridge piece.
Figures 8 and 9 show side elevational and upper plan views of one of the swivel bearings.
Figure 10 shows a front elevational view of one of the cams causing the swiveling of the bearings.
Figure 11 shows a cross-sectional view of one of the cams, taken along cut line XI-XI of figure 10.

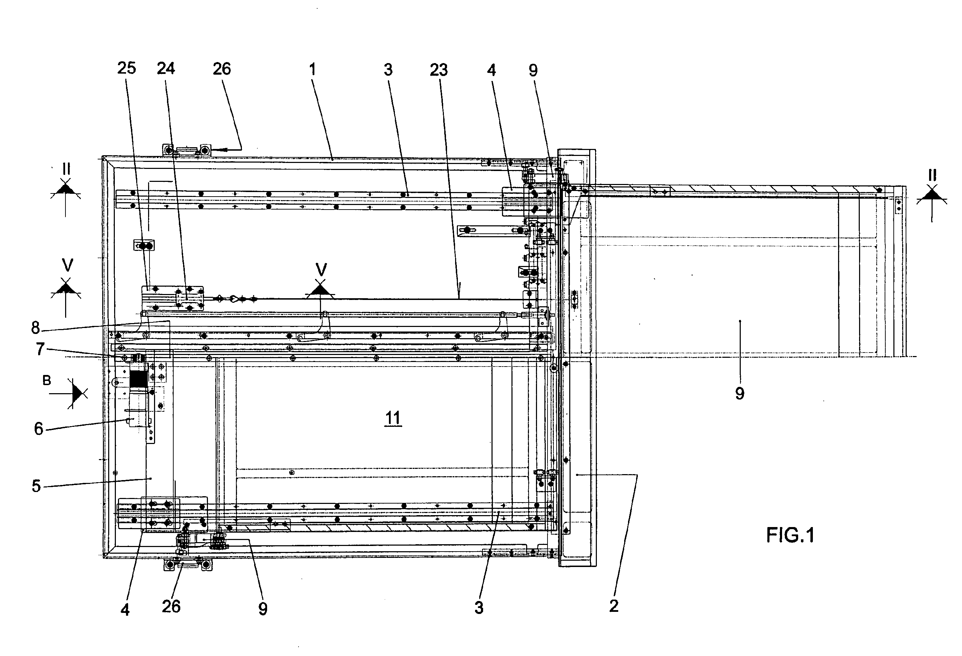

Figure 1 shows a plan view of the ramp of the invention, with the upper cover of the casing omitted in order to show the internal mechanisms.

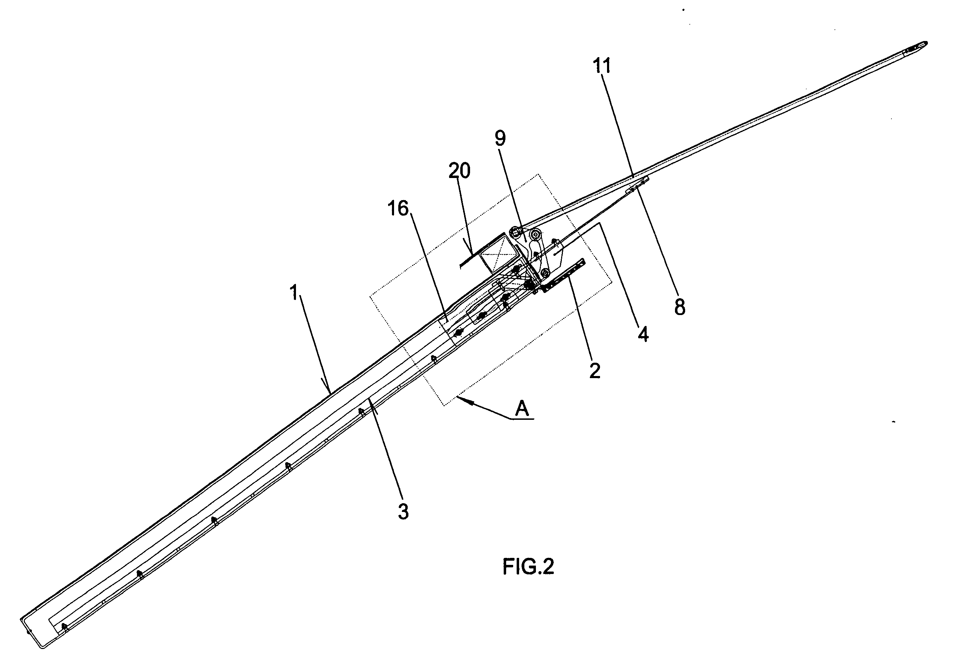

As can be seen in figures 1 and 2, the ramp includes a casing referenced with the number 1, having a straight prismatic configuration, of a slightly rectangular plan form, open at one of its walls, which can be closed by means of a collapsible gate 2 hinged to the casing.

Two tracks 3 running in a direction perpendicular to the open wall are fixed on the internal surface of the bottom of the casing. On top of these tracks, the same number of carriages 4 are assembled with the ability to move therein, between which a bridge piece 5 is fixed, parallel to the open wall of the casing. This bridge piece bears a motor 6, the shaft of which incorporates a pinion 7 fixed thereto meshing with a rack 8 fixed on the internal surface of the bottom of the casing, in a direction parallel to the tracks 3.

The bridge piece 5 assembly bears two collapsible bearings 9 hinged to the carriages 4 according to pins 10 aligned in a direction perpendicular to the tracks 3. The extractable platform 11 is hinged at its rear edge between these swivel bearings, according to pins 12 parallel to the swivel pins 10 of the bearings 9.

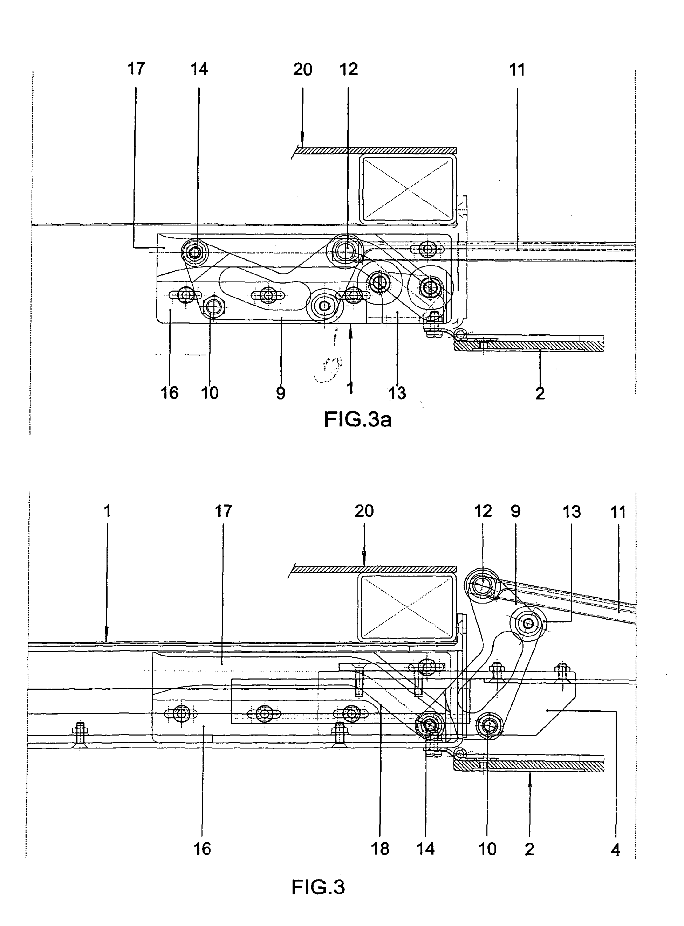

As can be seen better in figures 3, 3a, 8 and 9, the swivel bearings 9 also bear a wheel 13 and a pulley 14.

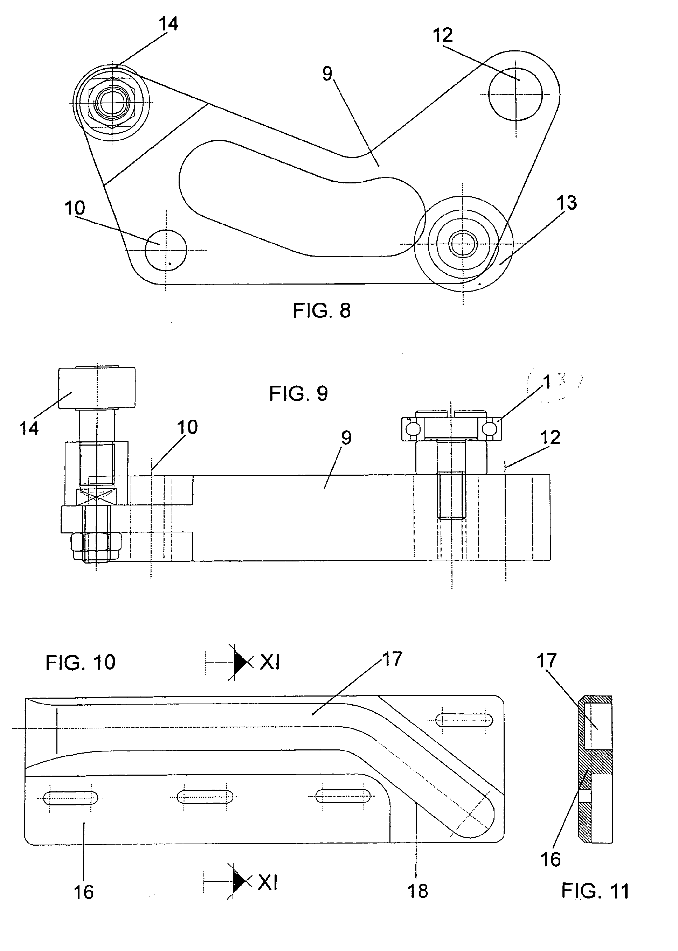

Respective cams 16 are fixed on the internal surface of the walls of the casing 1 which border the open wall, and from said open wall, which cams, as can be seen better in figures 10 and 11, consist of the same number of plates which, on their facing surfaces, are provided with respective equal channels, including an internal, horizontal span 17 and a downwardly tilting end span 18. The bearings 9 can move along the casing in a horizontal collapsed position, as shown in figures 3a and 8, in which the pulley 14, wheel 13 and hinge pins 10 and 12 to the bridge piece and extractable platform are distributed, approximately, according to the vertices of an inverted trapezium, the pulley 14 and hinge pin to the platform occupying the upper, rear and front positions, respectively, whereas the hinge pin 10 to the bridge piece and the wheel 13 occupy the lower, rear and front positions, respectively.

When the bridge piece 5 moves outwardly with the carriages 4, the pulleys 14 of the bearings 9 reach the horizontal channel 17 of the cams 16, the bearings 9 of the casing 1 moving along said grooves and progressively projecting. When the pulleys 14 reach the tilted span 18 of the cams, the swiveling of said bearings occurs until the position of figure 3 is reached, in which the platform 11 is completely outside of the casing 1 and runs in a position tilted downwards, towards its free edge, and rests on the wheel 13, a wheel also serving to facilitate the movement of the bearings 9 through the interior of the casing by resting and rolling on the internal surface of the bottom of said casing, as shown in figure 3a.

In the position of figure 3, the swiveling of the bearings 9 causes the lifting of the platform 11, such that the latter can pull away from the surface 20 of the vehicle.

Movement of the bridge piece 5 is achieved by means of the actuation of the motor 6, the pinion of which meshes with the rack 8; depending on the rotation direction of the motor 6, the platform 11 will move towards the interior or exterior of the casing 1.

Figure 2 shows the platform 11 in an extracted use position, whereas figure 3a shows the bearing 9 inside the casing, in the initial phase of extraction of the platform 11 or in the initial phase of introduction thereof.

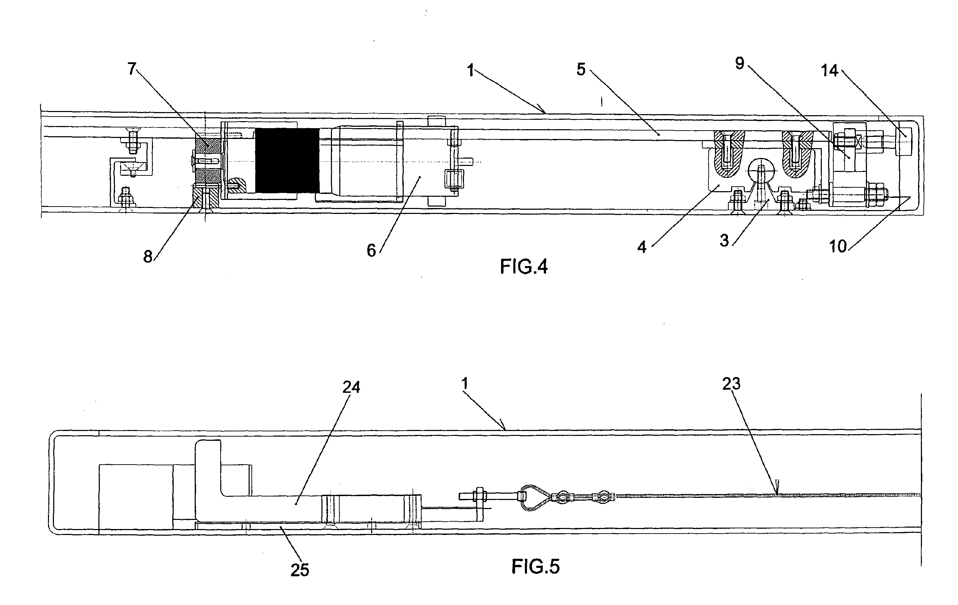

Figures 4, 6 and 7 more clearly show the constitution of the bridge piece 5 assembled on the carriages 4 movable along the tracks 3, said bridge piece being provided with a bearing 21 for the motor 6, as well as with end of run 22 stops.

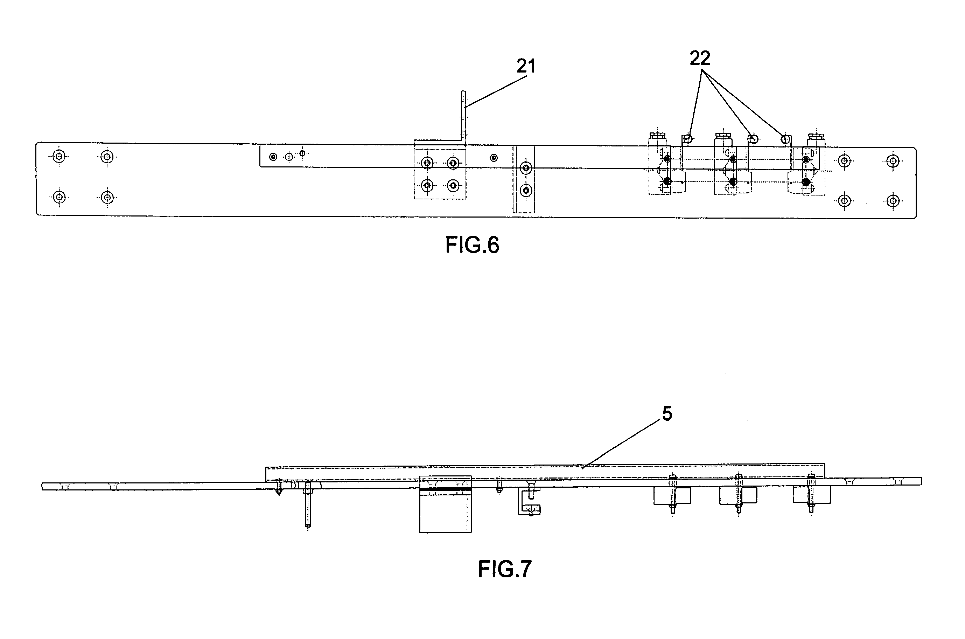

As can be seen in figures 1 and 5, the gate 2 incorporates a dosure element connected thereto constituted of a cable or towline 23 fixed at one end to said gate, whereas at the opposite end, it is anchored to a bearing 24 which is assembled and can move along a track 25 located near the bottom of the casing.

During the process for drawing in the platform 9 when the latter is near its most internal position, the rear edge thereof collides against the bearing 24, moving it backwards and drawing the cable 23 of the gate 2, making it turn to its lifted closure position.

The casing 1 can be provided with external bearings 26 for the anchoring or fixing thereof in the cavity of the vehicle where it is to be assembled.

Starting from an inoperative or retraction position of the platform 9, the corresponding electric control is actuated in order to proceed to its extraction, the motor 6 being actuated which, through the pinion 7, causes the outward movement of the carriages 4, bridge piece 5 and platform 9.

During the time that the platform 9 is drawn in, warning signals, as well as the brake signals of the vehicle, will remain active. If the vehicle is not stopped, the ramp will not begin its extraction.

After having begun the extraction of the platform 11, the lifting mechanism of the cover or gate 2 is released, allowing the latter to open and occupy a horizontal position.

In the last extraction span of the platform 9, the pulley 14 of the swivel bearings 9 is introduced in the channels of the cam 16, beginning the upward swiveling of the bearing 9, as the extraction thereof occurs, until reaching the position of figure 3.

During the aforementioned process, in the event the platform 9 encounters any obstacles, the extraction operation is interrupted, and the platform is drawn in to the starting position, all this as a result of a sensor 28, figure 2, placed beneath the step. This sensor is deactivated when movement begins, so it does not detect the front cover, and at the end, so it does not detect the ground.

To draw in the platform 9, the reverse operation occurs, by means of operating the corresponding knob or button, until the platform is completely drawn in, as shown in the lower half of figure 1.

Control of the positions of the platform 9 is carried out by ends of run 22 assembled on the bridge piece, which will activate or not according to the position of end of run stops.

When the platform is completely drawn in, the electric motor 6 is locked, preventing the cover 2 from being opened, such that an anti-theft system is obtained. The electric motor also remains locked when the platform 9 is in the unfolded or extracted position to prevent any movement when using the ramp.

In addition to the aforementioned sensor 28 of the platform 9, the electric-circuit will include a card which can be provided with other safety means, for users as well as for the ramp itself. For example, an adjustable potentiometer can be included which stops the extraction or drawing in process if consumption of the motor exceeds the intensity to which it has been set.

The ramp can be provided with a switch that selects an automatic or manual operation system.

## Claims

1. A ramp for accessing vehicles, comprising a casing (1) with a straight prismatic box shape, having a square or rectangular plan form and a short height, open at one of its walls, which can be closed by means of a collapsible gate (2), which casing houses an extractable platform (11), extractable through the open wall, as well as a linear operation mechanism responsible for moving said platform between retraction and extraction positions, **characterized in that** the linear operation mechanism comprises a bridge piece (5) parallel to the open wall of the casing, assembled on carriages (4) which can move on tracks (3) internally running on the bottom of the casing in a direction perpendicular to said open wall; the bridge piece of which incorporates a drive motor assembled therein, with a gear ring (7) meshing with a solidly fixed rack (8) of the casing and parallel to said tracks (3), and two swivel side bearings (9), between which the extractable platform (11) is hinged at its rear edge, according to a pin (12) perpendicular to the direction of movement of said platform, the side bearings (9) bearing respective wheels (13) with aligned pins, on which the extractable platform rests, and two pulleys (14) which can move on front cams (16) arranged inside the casing, bordering the open wall, which have a profile guiding said wheels for causing the swiveling of the bearings (9) between a collapsed position, in which the platform (11) can move through the interior of the casing parallel to its base, and a lifted position, outside of the casing, in which the bearings (9) exceed the upper base of the casing and the platform runs in a position tilted downwards towards its front edge.

2. A ramp according to claim 1, **characterized in that** the swivel side bearings (9) are hinged to the carriages (4) on which the bridge piece (5) is assembled according to aligned pins (10) located behind the hinge pins (12) between said bearings and the extractable platform, when said bearings are in a collapsed position.

3. A ramp according to claims 1 and 2, **characterized in that** when the swivel side bearings (9) are in the collapsed position, the pulley (14), wheel (13) and hinge pins (10-12) to the bridge piece and extractable platform are distributed, approximately, according to the vertices of an inverted trapezium, the pulley (14) and hinge pin (12) to the platform occupying the upper, rear and front positions, respectively, whereas the hinge pin (10) to the bridge piece, and the wheel (13) occupy the lower, rear and front positions, respectively.

4. A ramp according to claim 1, **characterized in that** the cams (16) are fixed to the internal surface of the walls of the casing adjacent to the open wall thereof, from the front edge of said walls, and are provided with respective facing channels including two straight, consecutive spans (17-18), along which the wheel (13) of the side bearings runs, an upper internal span (17) parallel to the bases of the casing, and a tilted end span (18), running with a downward tilt and reaching the height of the hinge pin (10) of the side bearings and the bridge piece.

5. A ramp according to claim 1, **characterized in that** the gate (2) closing the open wall of the casing incorporates a cable (23) connected thereto, fixed at its free end to a bearing (24) assembled inside the casing with the ability to move in a direction perpendicular to said open wall, between a front position, in which the door remains collapsed in an open position, and another rear position in which the door remains in a closed vertical position, said bearing (24) being pushed by the bridge piece (5), from its front position to the rear position, when the extractable platform (11) is drawn in.
